# EUROPÄISCHE PATENTSCHRIFT

(11) **EP 0 902 578 B1**
(45) Veröffentlichungstag und Bekanntmachung des Hinweises auf die Patenterteilung: **12.04.2006**
(21) Anmeldenummer: 98112690.7
(22) Anmeldetag: 09.07.1998
(51) Int. Cl.: H04M 1/60, H04M 1/27

(54) **Telefoneinrichtung mit Freisprecheinrichtung**
Telephone equipment for handsfree use
Dispositif téléphonique pour usage mains libres

(30) Priorität: 11.09.1997 DE 29716344 U
(43) Veröffentlichungstag der Anmeldung: 17.03.1999
(73) Patentinhaber: Bury Sp.z.o.o, 39 300 Mielec (PL)
(72) Erfinder: Bury, Henryk, Dipl.-Ing., 32584 Löhne (DE)
(74) Vertreter: Lins, Edgar

(56) Entgegenhaltungen:
- EP-A- 0 739 121
- EP-A- 0 788 268
- US-A- 5 335 261
- US-A- 5 384 834
- RUEHL ET AL: "SPS51 - A UNIVERSAL INTERFACE FOR HANDS-FREE TELEPHONY, SPEECH RECOGNITION AND SPEECH STORAGE IN THE CAR TELEPHONE" PHILIPS TELECOMMUNICATION REVIEW,PHILIPS TELECOMMUNICATIE INDUSTRIE N.V. HILVERSUM , NL, Bd. 48, Nr. 4, 1. Dezember 1990 (1990-12-01), Seiten 1-9, XP000178585

## Beschreibung

Die Erfindung betrifft eine Telefoneinrichtung mit Freisprecheinrichtung, insbesondere für Kraftfahrzeuge, mit je wenigstens einem im Fahrgastraum zu installierenden Lautsprecher und Mikrofon für den Freisprechbetrieb, wobei die Telefoneinrichtung eine Spracherkennungseinrichtung aufweist, die mit dem Mikrofon der Freisprecheinrichtung zur Erfassung eines vom Benutzer gesprochenen Code-Wortes verbunden ist und die Telefoneinrichtung einen elektronischen Speicher umfasst, in dem einzelne Vergleichs-Code-Wörter abgelegt sind und eine Vergleichseinrichtung vorgesehen ist, die ein vom Benutzer gesprochenes Codewort mit den gespeicherten Vergleichs-Code-Wörtem vergleicht und bei Erkennen des verglichenen Code-Musters ein entsprechendes elektronisches Signal abgibt.

Bei Autotelefonen und so genannten Handys, die in Kraftfahrzeugen verwendet werden, finden Freisprecheinrichtungen zunehmende Verbreitung. Sie erlauben es, auch während der Fahrt Telefongespräche zu führen, ohne dass die Aufmerksamkeit des Fahrers nennenswert beeinträchtigt oder der Fahrer bei der Bedienung des Fahrzeugs durch Handhabung des Telefons behindert wird. Lediglich zum Anwählen eines Gesprächspartners wird nach wie vor die Aufmerksamkeit des Fahrers in erheblichem Maße gebunden.

Zur Vereinfachung des Anwählens eines Gesprächspartners sind ferner Telefoneinrichtungen mit Sprachanwahl bekannt. Eine Spracherkennungseinrichtung ist mit einem elektronischen Speicher verbunden, in dem beispielsweise von einem Benutzer programmierte Telefonnummern und ein einer jeweiligen Telefonnummer zugeordnetes, vom Benutzer vorgesprochenes Code-Wort abgelegt sind. Wenn das Code-Wort von der Spracherkennungseinrichtung erkannt wird, erfolgt die Anwahl der dem Code-Wort zugeordneten Telefonnummer.

Ein Problem bei der Sprachanwahl dieser Art besteht darin, dass die im Speicher der Spracherkennungseinrichtung gespeicherten, vom Benutzer vorgesprochenen Code-Wörter eine individuelle, von der Tonlage, der Ausdrucksweise und dgl. des Benutzers abhängige Charakteristik aufweisen. Die Spracherkennungseinrichtung kann nur dann die dem Code-Wort zugeordnete Telefonnummer ausfindig machen, wenn das abgespeicherte Code-Wort mit dem zum Anwählen gesprochenen Code-Wort übereinstimmt, d. h. der selbe Benutzer das Code-Wort spricht. Mit anderen Worten kann die Telefoneinrichtung mit Sprachanwahl als solche nur von dem Benutzer verwendet werden, der die in der Spracherkennungseinrichtung abgespeicherten Code-Wörter vorgesprochen hat.

EP 0 739 121 A2 offenbart ein Telefon der eingangs erwähnten Art, bei dem die Anwahl von Telefonnummern mittels der Sprachsignale benutzerunabhängig sein soll. Die Benutzerunabhängigkeit ergibt sich daraus, dass standardisierte Code-Wörter verwendet werden, die von allen Benutzern im Wesentlichen gleich ausgesprochen werden sollen. Hierzu werden die Ziffern und Telefonnummern gezählt. Dieses System berücksichtigt somit nicht, dass auch einfache Wörter, wie Ziffern, von unterschiedlichen Benutzern unterschiedlich ausgesprochen werden können und dass auch einfache Wörter in unterschiedlichen Dialekten unterschiedlich klingen. Voraussetzung für das Funktionieren des bekannten Systems ist somit, dass der Benutzer Code-Wörter, insbesondere Ziffern, in einer standardisierten Weise ausspricht. Geschieht dies nicht und spricht der Benutzer die Code-Wörter in einem ihm geläufigen Dialekt aus, wird es häufig zu einer Nichterkennung des Code-Wortes kommen.

Aufgabe der Erfindung ist es daher, eine Telefoneinrichtung mit einer Freisprecheinrichtung der eingangs erwähnten Art zu schaffen, das unabhängig vom Benutzer und unabhängig von einem Lernvorgang verwendet werden kann.

Diese Aufgabe wird erfindungsgemäß mit einer Telefoneinrichtung der eingangs erwähnten Art dadurch gelöst, dass in dem elektronischen Speicher der Telefoneinrichtung die einzelnen Vergleichs-Code-Wörter jeweils in großer Anzahl in unterschiedlicher Sprechweise abgelegt sind.

Die Erfindung fasst die Möglichkeiten einer Telefoneinrichtung mit Freisprecheinrichtung und sprecherunabhängiger Sprachanwahl in besonders zweckmäßiger Weise zusammen. Das für die Freisprecheinrichtung erforderliche Mikrofon kann zugleich zur Aufnahme der vom Benutzer gesprochenen Code-Wörter verwendet werden. Die Elektronik der Sprachanwahleinrichtung kann mit derjenigen der Freisprecheinrichtung zusammengefasst und beispielsweise in einem Gehäuse untergebracht werden, sodass die Montage im Fahrzeug vereinfacht wird.

Die von einem Benutzer gesprochenen Wörter sind die einzelnen Ziffern einer zu wählenden Telefonnummer, d.h., es wird nicht, wie bisher, ein Code-Wort verwendet, mit dem eine dem Code-Wort zugeordnete Telefonnummer ausgewählt wird, sondern der Benutzer spricht die vollständige, zu wählende Telefonnummer vor. Dabei sind die durch das Mikrofon erfassten einzelnen Ziffern der Telefonnummern jeweils bereits in größerer Anzahl in verschiedenen Tonlagen und unterschiedlichen Ausdrucksweisen im Speicher der Spracherkennungseinrichtung abgelegt. Diese erkennt trotz der Tonlage und Ausdrucksweise eines bestimmten Benutzers die einzelnen gesprochenen Ziffern der Telefonnummer, sodass sich das Telefon mit Sprachanwahl benutzerunabhängig verwenden lässt.

Die erfindungsgemäße Telefoneinrichtung mit Sprachanwahl lässt sich unmittelbar nach der Installation verwenden, da einerseits das Vorsprechen und Abspeichern von Code-Wörtern und andererseits die Programmierung von Telefonnummern entfällt. Zweckmäßigerweise werden die vom Benutzer gesprochenen Ziffern einer zu wählenden Telefonnummer zunächst im Speicher der Spracherkennungseinrichtung der Telefoneinrichtung abgespeichert, bevor mit der Erkennung der einzelnen Ziffern begonnen wird. Auf diese Weise geht keine Ziffer verloren.

Die erkannten Ziffern der Telefonnummer werden vorzugsweise ebenfalls im Speicher abgelegt. Die Telefonnummer wird erst dann angewählt, wenn nach der letzten im Speicher abgelegten Ziffer der Telefonnummer ein vorzugsweise verbales Wählkommando des Benutzers folgt, wie beispielsweise "Go" oder dergleichen. Das Wählkommando ist entsprechend bereits als Vergleichswählkommando im Speicher der Spracherkennungseinrichtung abgelegt. Auf diese Weise wird vermieden, dass beispielsweise aufgrund einer Unterbrechung beim Sprechen der zu wählenden Telefonnummer die Telefoneinrichtung mit Sprachanwahl die bisher erfasste, unvollständige Telefonnummer wählt.

Zweckmäßigerweise wird die Spracherkennungseinrichtung der Telefoneinrichtung auch durch ein verbales Startkommando, wie etwa "Start", aktiviert, bevor die zu wählende Telefonnummer vom Benutzer vorgesprochen wird. Das Startkommando ist ebenfalls als Vergleichsstartkommando im Speicher abgelegt.

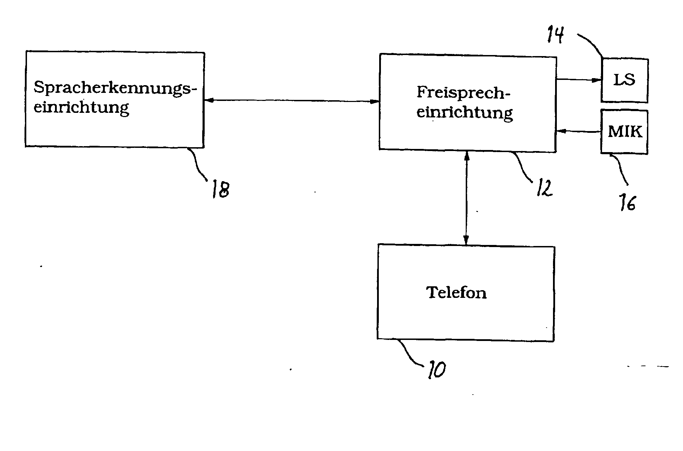

Im Folgenden werden bevorzugt Ausführungsbeispiele der Erfindung anhand der Zeichnung näher erläutert.

Die einzige Figur ist ein schematisches Blockschaltbild einer erfindungsgemäßen Telefoneinrichtung mit Sprachanwahl.

Eine beispielsweise in einem nicht dargestellten Kraftfahrzeug installierte Telefoneinrichtung mit Sprachanwahl ist mit einer Freisprecheinrichtung 12 gekoppelt, sodass das Führen eines Telefongesprächs mit aufgelegtem Hörer möglich ist. Die Freisprecheinrichtung 12 weist zur Wiedergabe des während eines Telefongesprächs vom Gesprächspartner Gesprochenen einen Lautsprecher 14 und zur Erfassung des vom Benutzer Gesprochenen ein Mikrofon 16 auf. Die Freisprecheinrichtung und das Telefon 10 sind mit einer insgesamt mit 18 bezeichneten Spracherkennungseinrichtung verbunden, die eine von der Telefoneinrichtung erfolgende Anwahl einer Telefonnummer in der Weise ermöglicht, dass der Benutzer die einzelnen Ziffern der zu wählenden Telefonnummer vorspricht. In einem nicht gezeigten elektronischen Speicher der Spracherkennungseinrichtung 18 sind alle Ziffern jeweils bereits in großer Anzahl in verschiedenen Tonlagen und in unterschiedlichen Ausdrucksweisen abgelegt, sodass die Spracherkennungseinrichtung die einzelnen Ziffern der vorgesprochenen Telefonnummer unabhängig von der Tonlage und der Ausdrucksweise des jeweiligen Benutzers erkennt. Auf diese Weise kann die Telefoneinrichtung mit Sprachanwahl benutzerunabhängig verwendet werden.

Im Folgenden soll genauer auf die Verwendung der Telefoneinrichtung mit Sprachanwahl eingegangen werden.

Die Spracherkennungseinrichtung 18 der Telefoneinrichtung mit Sprachanwahl wird zunächst durch ein verbales Startkommando, wie etwa "Start" aktiviert, das bereits als Vergleichsstartkommando im Speicher der Spracherkennungseinrichtung 18 abgelegt ist. Anschließend wird die anzuwählende Telefonnummer vom Benutzer vorgesprochen. Die Spracherkennungseinrichtung 18 erfasst über das Mikrofon 16 der Freisprecheinrichtung 12 die einzelnen Ziffern der Telefonnummer, vergleicht diese mit den im Speicher abgelegten Ziffern und speichert die jeweils erkannte Ziffer der Telefonnummer im Speicher ab. Nachdem der Benutzer die letzte Ziffer der Telefonnummer genannt hat, gibt er ein Wählkommando, wie etwa "Go", das ebenfalls bereits als Vergleichswählkommando im Speicher abgelegt ist. Die in der Spracherkennungseinrichtung 18 gespeicherte Telefonnummer wird vom Telefon 10 gewählt.

## Patentansprüche

1. Telefoneinrichtung mit Freisprecheinrichtung, insbesondere für Kraftfahrzeuge, mit je wenigstens einem im Fahrgastraum zu installierenden Lautsprecher (14) und Mikrofon (16) für den Freisprechbetrieb, wobei die Telefoneinrichtung eine Spracherkennungseinrichtung (18) aufweist, die mit dem Mikrofon (16) der Freisprecheinrichtung zur Erfassung eines vom Benutzer gesprochenen Code-Wortes verbunden ist und die Telefoneinrichtung einen elektronischen Speicher umfasst, in dem einzelne Vergleichs-Code-Wörter abgelegt sind und eine Vergleichseinrichtung vorgesehen ist, die ein vom Benutzer gesprochenes Codewort mit den gespeicherten Vergleichs-Code-Wörtern vergleicht und bei Erkennen des verglichenen Code-Musters ein entsprechendes elektronisches Signal abgibt, **dadurch gekennzeichnet, dass** in dem elektronischen Speicher der Telefoneinrichtung die einzelnen Vergleichs-Code-Wörter jeweils in großer Anzahl in unterschiedlicher Sprechweise abgelegt sind.

2. Telefoneinrichtung mit Freisprecheinrichtung gemäß Anspruch 1, **dadurch gekennzeichnet, dass** die gespeicherten Vergleichs-Code-Wörter die Ziffern von 0 bis 9 sind.

3. Telefoneinrichtung mit Freisprecheinrichtung gemäß Anspruch 1 oder 2, **dadurch gekennzeichnet, dass** die Spracherkennungseinrichtung (18) während des Telefonbetriebes abschaltbar und außerhalb des Telefonbetriebes in einen Bereitschaftszustand umschaltbar ist.

## Claims

1. Telephone equipment for handsfree use, in particular for motor vehicles, in each case with at least one loudspeaker (14) and microphone (16) to be installed in the passenger compartment for handsfree operation, whereby the telephone equipment has voice recognition equipment (18) which is connected to the microphone (16) of the handsfree equipment to input a code word spoken by the user, and the telephone equipment comprises an electronic memory in which individual comparison code words are stored, and comparison equipment is provided which compares a code word spoken by the user with the stored comparison code words, and, if it recognises the compared code pattern, it transmits a corresponding electronic signal, **characterised in that** the individual comparison code words are stored in electronic memory of the telephone equipment each in a large number in different spoken forms.

2. Telephone equipment for handsfree use according to claim 1, **characterised in that** the stored comparison code words are the digits 0 to 9.

3. Telephone equipment for handsfree use according to claim 1 or 2, **characterised in that** the voice recognition equipment (18) can be de-activated during telephony operation, and can be switched over to a standby mode outside telephony operation.

## Revendications

1. Dispositif téléphonique avec dispositif mains-libres, notamment pour véhicules automobiles, avec au minimum un ensemble haut-parleur (14) et microphone (16) à installer dans l'habitacle du véhicule pour l'usage mains-libres, le dispositif téléphonique présentant un dispositif de reconnaissance vocale (18) qui est relié au microphone (16) du dispositif mains-libres pour l'acquisition d'un mot-code prononcé par l'utilisateur, le dispositif téléphonique comprenant une mémoire électronique, dans laquelle des mots-codes de comparaison particuliers sont stockés et dans laquelle est prévu un dispositif de comparaison qui compare un mot-code prononcé par l'utilisateur avec les mots-codes de comparaison mémorisés et qui délivre lors de l'identification de l'échantillon-code comparé un signal électronique correspondant, **caractérisé en ce que** les mots-codes de comparaison particuliers sont chacun stockés dans la mémoire électronique du dispositif téléphonique en grande quantité dans une diction différente.

2. Dispositif téléphonique avec dispositif mains-libres selon la revendication 1, **caractérisé en ce que** les mots-codes de comparaison mémorisés sont les chiffres de 0 à 9.

3. Dispositif téléphonique avec dispositif mains-libres selon la revendication 1 ou 2, **caractérisé en ce que** le dispositif de reconnaissance vocale (18) peut être mis à l'arrêt lors du fonctionnement en téléphone et être basculé dans un état de veille en dehors du fonctionnement en téléphone.
